# EUROPÄISCHE PATENTSCHRIFT

(11) **EP 2 509 780 B1**
(45) Veröffentlichungstag und Bekanntmachung des Hinweises auf die Patenterteilung: **08.01.2014**
(21) Anmeldenummer: 10768709.7
(22) Anmeldetag: 06.10.2010
(51) Int. Cl.: B29D 30/66, B60C 11/16, B29C 35/04, B29C 35/08

(54) **VERFAHREN UND VORRICHTUNG ZUM AKTIVIEREN EINES HAFTSYSTEMS VON SPIKES**
METHOD AND DEVICE FOR ACTIVATING A BONDING SYSTEM FOR SPIKES
PROCÉDÉ ET DISPOSITIF POUR ACTIVER UN SYSTÈME ADHÉSIF DE CRAMPONS

(30) Priorität: 09.12.2009 DE 102009044845
(43) Veröffentlichungstag der Anmeldung: 17.10.2012
(73) Patentinhaber: Continental Reifen Deutschland GmbH, 30165 Hannover (DE)
(72) Erfinder: BANGERT, Heinz-Albert, 34497 Korbach (DE); DIETMANN, Torsten, 34454 Bad Arolsen (DE); BUTTERWECK, Frank, 34513 Waldeck Sachsenhausen (DE); HARISCH, Ralph, 34308 Bad Emstal (DE); HÖER, Thorsten, 34454 Bad Arolsen (DE)
(74) Vertreter: Finger, Karsten
(86) Internationale Anmeldenummer: PCT/EP2010/064870
(87) Internationale Veröffentlichungsnummer: WO 2011/069702

(56) Entgegenhaltungen:
- DE-A1- 4 101 729
- FR-A1- 2 340 831
- GB-A- 157 113
- GB-A- 968 003
- JP-A- 58 051 134
- JP-A- 59 002 830
- JP-A- 59 052 635
- US-A- 3 998 981

## Beschreibung

Die Erfindung betrifft eine Vorrichtung und ein Verfahren zum Wärmeaktivieren eines Gummi-Metall-Haftsystems von Spikes, welche in den Laufstreifen eines fertig vulkanisierten Fahrzeugluftreifens eingebracht worden sind.

Aus der GB 968 003 A ist es bekannt, Spikes, die mit einer Haftlösung behandelt worden sind, in Löchern im fertigen Reifen zu verankern. Nach dem Einsetzten der Spikes wird der Reifen wärmebehandelt. Die DE 41 01 729 A1 offenbart eine Vorrichtung zur Vorbereitung von großvolumigen Rohlingen für die Bearbeitung in Vulkanisationspressen, wobei eine UHF-Behandlung in einer Kammer vorgesehen ist, in welche die Rohlinge über eine Rollenbahn eingeschoben werden können.

Eine noch nicht veröffentlichte deutsche Patentanmeldung der Anmelderin befasst sich mit einem Verfahren zum Verankern von Spikes in einem Laufstreifen des fertig vulkanisierten Fahrzeugluftreifens, welche in Spikelöcher im Laufstreifen eines Reifens unter Pressung des Gummimaterials eingebracht werden. Die Spikes werden vor dem Einbringen in den Laufstreifen mit einem Haftsystem bzw. Primer beschichtet. Das Haftsystem wird bei eingebrachten Spikes durch Wärme aktiviert, sodass eine Haftverbindung der Spikes zum Gummimaterial des Laufstreifens hergestellt wird. Die Aktivierung des Haftsystems bzw. Primers der Spikes erfolgt bei einer bevorzugten Ausführungsform durch Induktionsheizen, wobei es erforderlich ist, jeden Spike mit einer separaten Induktionsheizeinrichtung zu erhitzen. Ein Aufheizen der einzelnen Spikes ist mit der notwendigen Genauigkeit kaum möglich, es besteht die Gefahr von lokalen Überhitzungen des im Reifen befindlichen Gürtelverbandes und somit die Gefahr der Beschädigung des Reifens. Dieses Aktivierungsverfahren ist somit sehr aufwändig und in eine weitgehend automatisierte Reifenherstellung kaum einbindbar.

Der Erfindung liegt die Aufgabe zugrunde, ein Verfahren und eine Vorrichtung zur Verfügung zu stellen, welche eine Aktivierung des Gummi-Metall-Haftsystems der Spikes ohne thermische Überlastung des Reifens gestatten. Die Aktivierung soll von der Reifendimension unabhängig sein, ein vollautomatischer Ablauf einer hohen Stückzahl von Reifen soll möglich sein.

Was die Vorrichtung betrifft, wird die gestellte Aufgabe erfindungsgemäß dadurch gelöst, dass zumindest eine Heizstation vorgesehen ist, welche einen mit Sattdampf beaufschlagbaren Durchlaufofen aufweist, welcher eine verschließbare Einlassöffnung und eine verschließbare Auslassöffnung aufweist, wobei einlassseitig und auslassseitig Transportbänder vorgesehen sind, welche zum Bestücken des Durchlaufofens mit Reifen und zum Abtransport der behandelten Reifen jeweils in eine Position bringbar sind, in welcher sie durch die geöffnete Einlass- bzw. Auslassöffnung in den Durchlaufofen ragen.

Was das Verfahren betrifft wird die gestellte Aufgabe erfindungsgemäß dadurch gelöst, dass die mit den Spikes bestückten Reifen mittels einer Transporteinrichtung in einen Durchlaufofen transportiert werden, in den geschlossenen Durchlaufofen zum Wärmeaktivieren der Haftsysteme Sattdampf eingebracht wird und nach der Wärmeaktivierung die Reifen mittels einer weiteren Transporteinrichtung dem Durchlaufofen entnommen werden.

Gemäß der Erfindung werden die Fahrzeugluftreifen zum Aktivieren des Haftsystems der Spikes gleichmäßig mittels Sattdampf erwärmt, wobei dieser Prozess derart eingestellt werden kann, dass die Reifen thermisch nicht überlastet werden. Darüber hinaus ermöglicht die Erfindung einen von der Reifendimension unabhängigen und vollautomatisch durchführbaren Ablauf.

Bei einer bevorzugten Ausführungsform der Erfindung sind die Transportbänder gegenüber dem Durchlaufofen verfahrbar angeordnet. Diese Maßnahme gestattet es, bei geöffneten Türen den Abstand zwischen der im Durchlaufofen befindlichen Reifenablage und dem jeweilige Transportband auf einfache Weise zu überbrücken.

Bei einer anderen Ausführungsform der Erfindung sind die Transportbänder derart ausgeführt, dass sie jeweils an ihrem dem Durchlaufofen zugewandten Endbereich einen bei Stillstand wegklappbaren Endabschnitt aufweisen.

Es ist von Vorteil, wenn sich im Inneren des Durchlaufofens ebenfalls zumindest ein Transport- bzw. Förderband befindet. Dieses Förderband wird beim Einbringen der Reifen in den Durchlaufofen und beim Abtransport der fertig geheizten Reifen in Betrieb genommen.

Um bei einer größeren Anzahl von Reifen gleichzeitig die Aktivierung des Haftsystems der Spikes durchführen zu können, ist es von Vorteil, wenn sich im Durchlaufofen mehrere, insbesondere in zwei Etagen übereinander angeordnete Förderbänder befmden, wobei vorzugsweise für jedes Förderband einlauf- und auslaufseitig jeweils ein Transportband zum Einbringen bzw. zum Abtransport der Reifen vorgesehen ist.

Bei einer weiteren vorteilhaften Ausführungsvariante der Erfindung ist jedes auslaufseitige Transportband in zwei Abtransportpositionen verstellbar. In einer der beiden Abtransportpositionen werden die Reifen ins Lager abtransportiert, in der anderen Abtransportposition kann eine behandelte Reifen-Charge, beispielsweise zur Durchführung einer gesonderten Qualitätskontrolle, separat abtransportiert werden.

Weitere Merkmale, Vorteile und Einzelheiten der Erfindung werden anhand der schematischen Zeichnung, die ein Ausführungsbeispiel darstellt, näher beschrieben. Dabei zeigen
Fig. 1 und Fig. 2 axiale Schnitte durch Profilelemente eines Laufstreifens eines Fahrzeugluftreifens,
Fig. 3 eine Draufsicht auf ein Basiskonzept einer erfindungsgemäßen Vorrichtung und
Fig. 4 und Fig. 5 seitliche Ansichten von wesentlichen Bestandteilen der Vorrichtung aus Fig. 3 in unterschiedlichen Ausführungsvarianten.

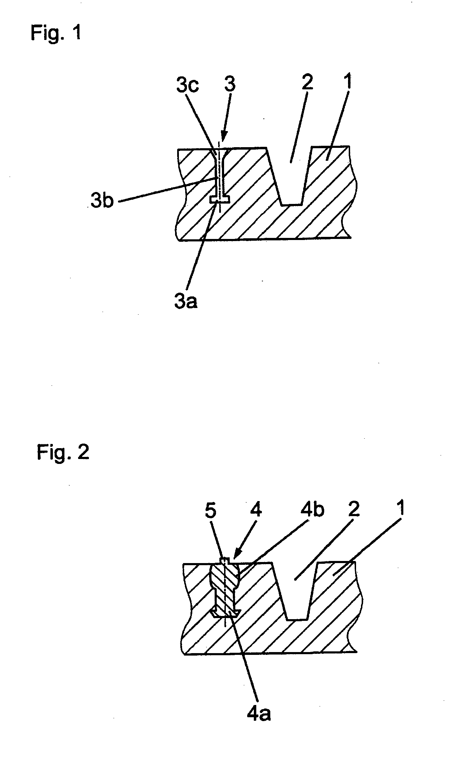

Fig. 1 und Fig. 2 zeigen zwei durch eine Nut 2 voneinander getrennte Profilelemente 1 eines Laufstreifens für Personenkraftwagen. Die Profilelemente 1 können Profilblöcke oder Laufstreifenbänder sein, die Nut 2 kann beispielsweise eine in Umfangsrichtung des Laufstreifens umlaufende Nut sein. Fig. 1 zeigt ferner ein Spikeloch 3, welches bei der Vulkanisation des noch rohen Reifens in einer Vulkanisationsform durch einen entsprechend vorgeformten Formvorsprung ausgebildet wird. Das beispielhaft gezeigte Spikeloch 3 weist im radialen Schnitt einen Basisabschnitt 3a, einen zentralen, insbesondere kreiszylindrisch und sich in radialer Richtung erstreckenden Abschnitt 3b und, der Profiloberseite benachbart, einen Mündungsabschnitt 3c auf. Fig. 2 zeigt einen im Spikeloch 3 des bereits fertig vulkanisierten Fahrzeugluftreifens eingesetzten metallischen Spike 4, welcher einen Basisteil 4a aufweist, auf welchem ein einen Spikepin 5 tragender Spikekörper 4b sitzt.

Zumindest der Basisteil 4a und der Spikekörper 4b des Spikes 4 werden vor dem Verankern der Spikes 4 im Spikeloch 3, beispielsweise in einem Tauchverfahren, mit einem Gummi-Metall-Haftsystem beschichtet, welches nach dem Einsetzen der Spikes 4 in den Laufstreifen durch eine gesonderte Wärmebehandlung aktiviert wird und derart eine Verbindung des Spikes 4 zum Gummimaterial des Profilelementes 1 bewirkt. Das verwendete Gummi-Metall-Haftsystem kann einer der bekannten Primer, beispielsweise Parlock, Chemlock oder Chemosil, sein. Die Beschichtung der Spikes 4 erfolgt im Anschluss an eine mechanische oder chemische Reinigung, wobei die Dicke der am Spike 4 befindlichen, trockenen Primerschicht zwischen 2 µm und 60 µm beträgt.

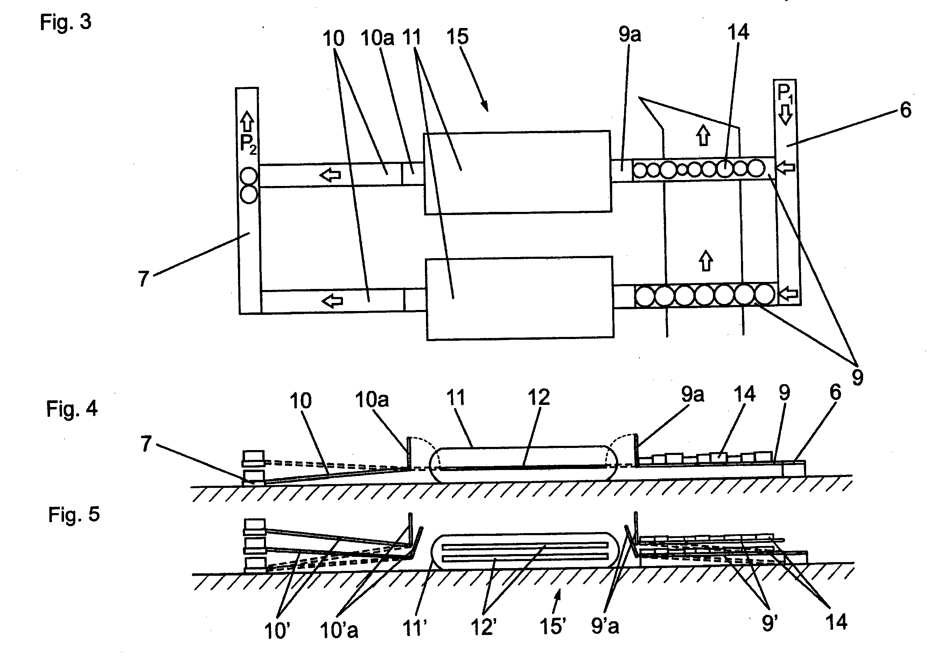

Fig. 3 und Fig. 4 zeigen schematische Ansichten einer Vorrichtung, mit welcher eine Wärmeaktivierung des Primers der im Laufstreifen eines Fahrzeugluftreifen eingebrachten Spikes 4 auf eine für den Reifen schonende und automatisiert ablaufende Weise möglich ist. Die Vorrichtung weist zwei parallel angeordneten Heizstationen 15, welche an eine gemeinsame Einrichtung 6 zur Reifenzuführung und an eine gemeinsame Einrichtung 7 zum Reifenabtransport angeschlossen sind. Die Einrichtungen 6 und 7 sind beispielsweise Transportbänder, die in Richtung der Pfeile P1 und P2 bewegbar sind. An der Seite der Reifenzuführung erfolgt eine Übergabe der mit Spikes 4 versehenen Reifen 14 auf jeweils ein einlaufseitiges Transportband 9, welches die Reifen in einen mit Sattdampf beaufschlagbaren Durchlaufofen 11 transportiert. Der Abtransport der im Durchlaufofen 11 behandelten Reifen 14 Richtung Lager erfolgt über je ein auslaufseitiges Transportband 10, welches die Reifen an die Einrichtung 7 übergibt. Die einlaufseitigen Transportbänder 9 sowie die auslaufseitigen Transportbänder 10 weisen an ihren dem Durchlaufofen 11 zugewandten Enden hochklappbare Endabschnitte 9a, 10a auf. In der Betriebsstellung der Transportbänder 9, 10 befinden sich die Endabschnitte in der Bandebene, sodass eine ungehinderte Bandbewegung möglich ist. Bei still stehendem Transportband 9, 10 sind die Endabschnitte in eine beispielsweise senkrechte Position klappbar.

Wie Fig. 4 zeigt ist im Inneren jedes Durchlaufofens 11 ein weiteres Förderband 12 positioniert, welches zu den Transportbändern 9 und 10 ausgerichtet ist. Der Durchlaufofen 11 ist ferner an seinen beiden den Transportbändern 9, 10 zugewandten Seiten mit je einer durch eine nicht dargestellte Türe verschließbaren Öffnung versehen. Bei geöffneten Türen ragen die Transportbänder 9 und 10 in den Durchlauföfen 11 hinein und schließen unmittelbar an das Förderband 12 an. Das auslaufseitige Transportband 10 ist wahlweise in zwei Positionen bringbar, wobei in Fig. 4 die eine Position mit durchgezogenen Linien und die anderen mit gestrichelten Linien eingezeichnet ist. Die in gestrichelten Linien eingezeichnete Position ist beispielsweise jene, die einen gesonderten Abtransport einer im Durchlaufofen 11 behandelten Reifencharge, etwa zu Zwecken einer Qualitätskontrolle, gestattet. Die in durchgezogenen Linien gezeichnete Position ist jene, die den Abtransport der Reifen 14 ins Reifenlager ermöglicht.

Der grundsätzliche Ablauf zur Behandlung von bespikten Reifen 14 ist wie folgt. Die mit den Spikes 4 bestückten Reifen 14 werden mittels der Einrichtung 6 auf die einlaufseitigen Transportbänder 9 übergeben. Die den Transportbändern 9 zugewandten Türen der Durchlauföfen 11 sind geöffnet, sodass die einlaufseitigen Transportbänder 9 mit ihren Endabschnitten 9a in die Durchlauföfen 11 hinein ragen. Die Reifen 14 werden vom Transportband 9 auf das Förderband 12 übergeben. Ist das Förderband 12 mit Reifen belegt, wird es, ebenso wie die einlaufseitigen Transportbänder 9 angehalten. Die klappbaren Endabschnitte 9a werden hochgeklappt und die Türen der Durchlauföfen 11 geschlossen. Bei geschlossenen Türen erfolgt die Zuführung von Sattdampf in das Innere der Durchlauföfen 11 bis ein voreingestellter Dampfdruck erreicht bzw. aufgebaut ist. Nach Erreichen der Soll-Temperatur wird diese für einen vorab definierten Zeitraum gehalten und dadurch das Haftsystem der Spikes 4 aktiviert. Nun werden Druck und Temperatur reduziert, die Durchlauföfen 11 auslaufseitig geöffnet, die Endabschnitte 10a der auslaufseitigen Transportbänder 10 heruntergeklappt und die Reifen 14 mit den eingeheizten Spikes 4 aus den Durchlauföfen 11 auf die auslaufseitigen Transportbänder 10 befördert. Zum Durchführen des nächsten Heizzyklus werden die Endabschnitte 10a der auslaufseitigen Transportbänder 10a hochgeklappt, die hier befindlichen Türen der Durchlauföfen 11 geschlossen, die einlaufseitig gelegenen Türen der Durchlauföfen 11 geöffnet, die Endabschnitte 9a der einlaufseitigen Transportbänder 9 heruntergeklappt und die Transportbänder 9 wieder in Betrieb genommen.

Fig. 5 zeigt eine Variante einer Heizstation 15' mit zwei übereinander angeordneten Etagen. Im Durchlaufofen 11' sind zwei Förderbänder 12' übereinander positioniert, einlaufseitig sind zwei Transportbänder 9' und auslaufseitig zwei Transportbänder 10' übereinander angeordnet, welche analog zur ersten Ausführungsform mit klappbaren Endabschnitten 9'a, 10'a versehen sind. Die Wärmeaktivierung der Haftsysteme der Spikes 4 erfolgt auf analoge Weise zur ersten Ausführungsvariante. Wie in Fig. 5 dargestellt können die beiden auslaufseitigen Transportbänder 10' in jeweils zwei Positionen bringbar sein, um einen Reifenabtransport in Richtung Lager oder in Richtung Kontrollstation zu ermöglichen.

Die Vorrichtung gemäß der Erfindung weist zumindest eine Heizstation 15, 15' auf. Sie kann selbstverständlich mit mehr als zwei Heizstationen 15, 15' versehen sein. Es ist möglich, die Transportbänder 9, 10 verfahrbar anzuordnen, sodass sie aus den Öffnungsbereichen des Durchlaufofens weg bewegbar bzw. schiebbar und in den Durchlaufofen hinein bewegbar sind. Schwenkbare Bandabschnitte erübrigen sich bei dieser Ausführungsform.

### Bezugszeichenliste

1......... Profilelement
2.........Nut
3......... Spikeloch
3a....... Basisabschnitt
3b....... zentraler Abschnitt
3c ....... Mündungsabschnitt
4......... Spike
4a ....... Basisteil
4b....... Spikekörper
5......... Pin
5b....... Gürtellage
6......... Einrichtung zur Reifenzuführung
7......... Einrichtung zum Reifenabtransport
P₁....... Pfeil
P₂ .......Pfeil
9......... Transportband einlaufseitig
9' ....... Transportband einlaufseitig
10 ....... Transportband auslaufseitig
10' ...... Transportband auslaufseitig
9a ....... klappbarer Endabschnitt
9'a...... klappbarer Endabschnitt
10a ..... klappbarer Endabschnitt
10'a....klappbarer Endabschnitt
11....... Durchlaufofen
11'...... Durchlaufofen
12....... Förderband
12'...... Förderband
14.......Reifen
15....... Heizstation
15'...... Heizstation

## Patentansprüche

1. Vorrichtung zum Wärmeaktivieren eines Gummi-Metall-Haftsystems von Spikes (4), welche in den Laufstreifen eines fertig vulkanisierten Fahrzeugluftreifens eingebracht worden sind,
**dadrch gekennzeichnet**,
dass zumindest eine Heizstation (15, 15') vorgesehen ist, welche einen mit Sattdampf beaufschlagbaren Durchlaufofen (11, 11') aufweist, welcher eine verschließbare Einlassöffnung und eine verschließbare Auslassöffnung aufweist, wobei ein einlaufseitiges und ein auslaufseitiges Transportband (9,10, 9', 10') vorgesehen sind, welche Transportbänder (9, 10, 9', 10') zum Bestücken des Durchlaufofens (11, 11') mit Reifen und zum Abtransport der behandelten Reifen jeweils in eine Position bringbar sind, in welcher sie durch die geöffnete Einlass- bzw. Auslassöffnung in den Durchlaufofen (11, 11') ragen.

2. Vorrichtung nach Anspruch 1, **dadurch gekennzeichnet, dass** die Transportbänder (9, 10, 9', 10') gegenüber dem Durchlaufofen (11, 11') verfahrbar angeordnet sind.

3. Vorrichtung nach Anspruch 1, **dadurch gekennzeichnet, dass** die Transportbänder (9, 10, 9', 10') bei Stillstand wegklappbare Endabschnitte (9a, 10a, 9'a, 10'a) aufweisen.

4. Vorrichtung nach Anspruch 1, **dadurch gekennzeichnet, dass** sich im Durchlaufofen (11, 11') zumindest ein Förderband (12, 12') befindet.

5. Vorrichtung nach Anspruch 4, **dadurch gekennzeichnet, dass** sich im Durchlaufofen (11') mehrere, insbesondere zwei in Etagen übereinander angeordnete Förderbänder (12') befinden.

6. Vorrichtung nach Anspruch 4 oder 5, **dadurch gekennzeichnet, dass** für jedes Förderband (12, 12') im Durchlaufofen (11, 11') einlauf- und auslaufseitig jeweils ein Transportband (9, 10, 9' 10') vorgesehen ist.

7. Vorrichtung nach einem der Ansprüche 1 bis 6, **dadurch gekennzeichnet, dass** jedes auslaufseitige Transportband (10, 10') in zwei Abtransportpositionen verstellbar ist.

8. Verfahren zum Wärmeaktivieren eines Gummi-Metall-Haftsystems von Spikes (4), welche in den Laufstreifen eines fertig vulkanisierten Fahrzeugluftreifens eingebracht worden sind,
**dadurch gekennzeichnet,**
**dass** die mit den Spikes (4) bestückten Reifen(14) mittels einer Transporteinrichtung in einen Durchlaufofen (11, 11') transportiert werden, in den geschlossenen Durchlaufofen (11, 11') zum Wärmeaktivieren der Haftsysteme Sattdampf eingebracht wird und nach der Wärmeaktivierung die Reifen (14) mittels einer weiteren Transporteinrichtung dem Durchlaufofen (11, 11') entnommen werden.

## Claims

1. Device for thermally activating a rubber-metal bonding system for spikes (4), which have been incorporated in the tread of a ready-vulcanized pneumatic vehicle tyre, **characterized in that** at least one heating station (15, 15') is provided, comprising a continuous furnace (11, 11') to which saturated steam can be admitted and which has a closable inlet opening and a closable outlet opening, wherein an inlet-side and an outlet-side transporting belt (9, 10, 9', 10') are provided, which transporting belts (9, 10, 9', 10') can each be brought into a position in which they reach through the opened inlet or outlet opening into the continuous furnace (11, 11') for the purpose of loading the continuous furnace (11, 11') with tyres and transporting the treated tyres away.

2. Device according to Claim 1, **characterized in that** the transporting belts (9, 10, 9', 10') are arranged such that they can be moved with respect to the continuous furnace (11, 11').

3. Device according to Claim 1, **characterized in that** the transporting belts (9, 10, 9', 10') have end portions (9a, 10a, 9'a, 10'a) that can be folded away when at a standstill.

4. Device according to Claim 1, **characterized in that** in the continuous furnace (11, 11') there is at least one conveyor belt (12, 12').

5. Device according to Claim 4, **characterized in that** in the continuous furnace (11') there are multiple conveyor belts (12'), in particular two arranged on levels one above the other.

6. Device according to Claim 4 or 5, **characterized in that** a transporting belt (9, 10, 9', 10') is respectively provided on the inlet side and outlet side for each conveyor belt (12, 12') in the continuous furnace (11, 11').

7. Device according to one of Claims 1 to 6, **characterized in that** each outlet-side transporting belt (10, 10') is adjustable into two transporting-away positions.

8. Method for thermally activating a rubber-metal bonding system for spikes (4), which have been incorporated in the tread of a ready-vulcanized pneumatic vehicle tyre, **characterized in that** the tyres (14) fitted with the spikes (4) are transported by means of a transporting device into a continuous furnace (11, 11'), saturated steam is introduced into the closed continuous furnace (11, 11') for thermally activating the bonding systems and, after the thermal activation, the tyres (14) are removed from the continuous furnace (11, 11') by means of a further transporting device.

## Revendications

1. Dispositif pour l'activation à chaud d'un système adhésif caoutchouc-métal de crampons (4), qui ont été implantés dans la bande de roulement d'un pneumatique de véhicule complètement vulcanisé, **caractérisé en ce qu'**il est prévu au moins une station de chauffage (15, 15'), qui comporte un four continu (11, 11') pouvant être alimenté en vapeur saturée, qui présente une ouverture d'entrée avec fermeture et une ouverture de sortie avec fermeture, dans lequel il est prévu une bande de transport (9, 10, 9', 10') côté entrée et côté sortie, bandes de transport (9, 10, 9', 10') qui, pour le chargement du four continu (11, 11') avec des pneus et pour l'évacuation des pneus traités, peuvent respectivement être amenées dans une position, dans laquelle elles pénètrent dans le four continu (11, 11') par l'ouverture d'entrée ou l'ouverture de sortie ouverte.

2. Dispositif selon la revendication 1, **caractérisé en ce que** les bandes de transport (9, 10, 9', 10') sont disposées de façon déplaçable par rapport au four continu (11, 11').

3. Dispositif selon la revendication 1, **caractérisé en ce que** les bandes de transport (9, 10, 9', 10') présentent à l'arrêt des parties d'extrémité escamotables (9a, 10a, 9'a, 10'a).

4. Dispositif selon la revendication 1, **caractérisé en ce qu'**il se trouve au moins une bande transporteuse (12, 12') dans le four continu (11, 11').

5. Dispositif selon la revendication 4, **caractérisé en ce qu'**il se trouve plusieurs, en particulier deux bandes transporteuses (12') disposées en étages l'une au-dessus de l'autre, dans le four continu (11').

6. Dispositif selon la revendication 4 ou 5, **caractérisé en ce qu'**il est prévu pour chaque bande transporteuse (12, 12') dans le four (11, 11'), côté entrée et côté sortie, chaque fois une bande de transport (9, 10, 9', 10').

7. Dispositif selon l'une quelconque des revendications 1 à 6, **caractérisé en ce que** chaque bande de transport côté sortie (10, 10') est déplaçable dans deux positions d'évacuation.

8. Procédé pour l'activation à chaud d'un système adhésif caoutchouc-métal de crampons (4), qui ont été implantés dans la bande de roulement d'un pneumatique de véhicule complètement vulcanisé, **caractérisé en ce que** l'on transporte les pneus (14) garnis des crampons (4) dans un four continu (11, 11') au moyen d'un dispositif de transport, on introduit de la vapeur saturée dans le four continu fermé (11, 11') pour l'activation à chaud des systèmes adhésifs et, après l'activation à chaud, on enlève les pneus (14) hors du four continu (11, 11') au moyen d'un autre dispositif de transport.
